# EUROPÄISCHE PATENTSCHRIFT

(11) **EP 0 627 301 B1**
(45) Veröffentlichungstag und Bekanntmachung des Hinweises auf die Patenterteilung: **23.12.1998**
(21) Anmeldenummer: 94107840.4
(22) Anmeldetag: 20.05.1994
(51) Int. Cl.: B29C 70/00, B29B 15/12

(54) **Glasfaserverstärkter Verbundwerkstoff und Verfahren zu seiner Herstellung**
Glasfiber reinforced composite material and process for its fabrication
Matériau composite renforcé par des fibres de verre et son procédé de fabrication

(30) Priorität: 27.05.1993 DE 4317649
(43) Veröffentlichungstag der Anmeldung: 07.12.1994
(73) Patentinhaber: Ticona GmbH, 65451 Kelsterbach (DE)
(72) Erfinder: Pfeiffer, Bernhard, Dr., D-65779 kelkheim (DE); Skaletz, Detlef, Dr., D-55128 Mainz (DE); Vandenbossche-Texier, Anne, F-59000 Lille (FR); Heckel, Horst, D-64285 Darmstadt (DE); Heydweiller, Joachim, D-65428 Rüsselsheim (DE)

(56) Entgegenhaltungen:
- EP-A- 0 056 703
- EP-A- 0 201 367
- EP-A- 0 342 080
- EP-A- 0 394 090
- DE-A- 3 821 803
- US-A- 4 743 413
- DATABASE WPI Week 7743, Derwent Publications Ltd., London, GB; AN 77-76961Y & JP-A-52 110 999 (ASHAI DOW) 17. September 1977
- PATENT ABSTRACTS OF JAPAN vol. 14, no. 330 (C-0741) 16. Juli 1990 & JP-A-02 120 257 (SHIMADZU) 8. Mai 1990
- G. CHRETIEN 'Matériaux composites à matrice organique' 1986 , TEC & DOC , PARIS Seite 447 bis 451 * Tabelle 1 *
- G. CHRETIEN 'Matériaux composites à matrice organique' 1986 , TEC & DOC , PARIS Seite 238 bis 252 * Tabelle 3 *

## Beschreibung

Die Erfindung betrifft einen glasfaserverstärkten Verbundwerkstoff und ein Verfahren zu seiner Herstellung, bei dem der Glasfaserstrang mit einer Schmelze thermoplastischer Polymere imprägniert wird.

Aus der deutschen Patentanmeldung DE-A 3821803 ist eine glasfaserverstärkte Polypropylenbahn mit einem Glasfaseranteil von 40 Gew.-% bekannt, die eine Biegefestigkeit-quer von 50 MPa aufweist, wenn das Polypropylen ausschließlich als Schmelze eingesetzt wurde. Wird ein Teil der Polypropylenschmelze durch Polypropylenrovings ersetzt, werden noch höhere Biegefestigkeiten-quer erreicht und die Probekörper überstehen den Schlagzähigkeitstest ohne Bruch. Bezüglich der Biegefestigkeit-längs werden von diesen Verbundwerkstoffen jedoch keine Werte größer als 180 MPa erreicht.

Die Herstellung faserverstärkter Thermoplastmaterialien durch Schmelzimprägnierung einer Vielzahl von Endlosfäden nach dem Schmelz-Pultrusions-Verfahren ist bekannt. So wird nach der EP-PS 56703 ein faserverstärkter Verbundwerkstoff gewonnen, der thermoplastisches Polymer und mindestens 30 Vol.-% parallel ausgerichtete Verstärkungsfäden enthält. Aufgrund der hohen Viskosität von Thermoplastschmelzen kann es zur unzureichenden bzw. unvollständigen Durchtränkung des Faserstrangs kommen. Es ist deshalb weiter bekannt, daß nach der EP-PS 56703 der Faserstrang mittels Faservorspannung und Leiten über Stäbe zur Umlenkung geöffnet wird. Nach der EP-PS 415517 wird die Polymerschmelze durch den Faserstrang gepreßt. Beide Verfahren haben den Nachteil, daß durch Einwirkung mechanischer Kräfte Faserschädigungen entstehen können.

Ebenfalls bekannt ist es, der Thermoplastschmelze geeignete Haftvermittler, Plastifiziermittel bzw. Kupplungsmittel zuzusetzen (vergl. u.a. DE-PS 2117095, US-PS 3993726, EP-PS 102158, 102159 und 150931). Diese Substanzen müssen jedoch aufwendig, durch mechanische Vermengen der Thermoplastschmelze zudosiert werden. Weiterhin führt die Anwendung dieser Substanzen bei der Extrusion des Basispolymers zum verstärkten thermischen Abbau der Matrix im Extruder.

Es bestand daher die Aufgabe, glasfaserverstärkte Verbundwerkstoffe mit möglichst vollständiger Imprägnierung des Faserstranges ohne Faserschädigungen herzustellen.

Erfindungsgemäß wurde diese Aufgabe dadurch gelöst, daß der Glasfaserstrang durch eine bewegte wässrige Pulverdispersion eines Kupplungsmittels über Umlenkkörper gezogen, das Dispergiermittel (Wasser] entfernt, das Pulver auf den Glasfaserstrang aufgeschmolzen und nachfolgend der vorbehandelte Faserstrang mit Polyolefinen in einer Schmelz-Pultrusion imprägniert wird. Als Kupplungsmittel werden vorzugsweise carbonsäuremodifizierte Polyolefine in einer Korngröße unter 150 Mikrometer, vorzugsweise unter 30 Mikrometer verwendet. Der Feststoffgehalt in der wässrigen Pulverdispersion beträgt vorzugsweise 10 bis 20 g/l. Mit dem erfindungsgemäßen Verfahren wird ein glasfaserverstärkter Verbundwerkstoff hergestellt, der aus einem Polyolefin und mindestens 40 Gew.- % Glasfasern besteht und eine Zugfestigkeit über 520 MPa, eine Biegefestigkeit-längs über 550 MPa, eine Biegefestigkeit-quer über 40 MPa und eine Schlagzähigkeit über 180 kJm⁻² aufweist.

Die mit dem erfindungsgemäßen Verfahren erzielten Vorteile bestehen darin, daß eine wesentlich bessere Haftung der Polyolefine auf dem Glasfaserstrang durch eine weite Aufspreizung der Glasfasern und Abscheidung des Haftvermittlers in hoher Konzentration direkt auf der Glasfaser, ohne Einwirkung großer mechanischer Kräfte erreicht wird. Überraschenderweise läßt sich damit ein glasfaserverstärkter Verbundwerkstoff mit deutlich verbesserten mechanischen Eigenschaften herstellen. Im Verbundwerkstoff kann so eine höhere Scherkraft übertragen werden, als es bisher bei dem bekannten Zusatz von Haftvermittlern in der Schmelz-Pultrusion möglich war. Weiterhin wird dadurch das aufwendige Zudosieren und mechanische Vermischen des Haftvermittlers mit der Polyolefinschmelze in der Schmelz-Pultrusion vermieden. Die erhaltenen Produkte können als Halbzeug für Filament Winding, Laminieren usw. wie auch als Schnittmaterial für Plastifizieren/Pressen, Blasformen und Spritzguß eingesetzt werden. Besondere Vorteile bestehen, wenn das Produkt als Profil ohne einen zusätzlichen Verarbeitungsschritt angewandt wird.

Das erfindungsgemäße Verfahren wird durch die nachfolgenden Beispiele näher erläutert.

### Beispiel 1:

Nach einem üblichen Schmelz-Pultrusionsverfahren wurde ein Vergleichsprodukt mit einem Glasfasergehalt von 50 Gew.-% hergestellt. Drei Glasfaser-Rovings mit je 1200 tex einer handelsüblichen Type mit einem Filamentdurchmesser von 17 Mikrometer wurden mit einer Geschwindigkeit von 3.75 m/min in einer 3-Zonenheizung bei 150/250/250 °C vorgeheizt.
Zur Schmelzimprägnierung wurde ein handelsübliches Polypropylen-Granulat unter Zusatz von Stabilisatoren verwendet. Vor der Pultrusion wurde ein handelsüblicher Haftvermittler mit einem Säuregehalt von ca. 5 % als Pulver mit dem Polyolefingranulat mechanisch vermischt. Der Haftvermittlergehalt betrug 1 Gew.-%, bezogen auf die Matrixmenge. Verwendet wurden dafür carbonsäure-modifizierte Polyolefine mit ca. 5 % Säuregehalt.

Aus dem Verbundwerkstoff wurden Tapes (25 mm breit, 0.25 mm dick) hergestellt, die anschließend zu Prüfkörpern (8 bzw. 12 Lagen, ca. 2 bzw. 3 mm dick) laminiert wurden. Die mechanischen Prüfdaten sind in der Tabelle 1 zusammengestellt.

### Beispiel 2

Analog zu Beispiel 1 wurde ein Produkt hergestellt, das erfindungsgemäß mit einer bewegten wässrigen Pulverdispersion vorbehandelt war.

Dazu wurden drei Glasfaser-Rovings mit je 1200 tex einer handelsüblichen Type mit einem Filamentdurchmesser von 17 Mikrometer mit einer Geschwindigkeit von 3,75 m/min durch eine wässrige Pulverdispersion von carbonsäuremodifizierten Polyolefinen gezogen.

Das Pulver hatte eine durchschnittliche Korngröße unter 40 Mikrometer. Es wurden dem Bad 20 g/l Feststoff zugesetzt. Als Dispersionshilfsmittel diente ein nichtionisches handelsübliches Tensid, das in einer Konzentration von 0,4 g/l zugegeben wurde. Verwendet wurde Nonylphenol-Polyglykolether.
Der Faserstrang wurde über 5 Stifte geführt. Der Gesamt-Umschlingungswinkel eines jeden Faserstranges betrug 250 Grad. Das Absetzen der Suspension wurde durch mechanisches Rühren verhindert. Mit Ultraschall wurden zusätzlich Agglomerate zerstört.

Zur Entfernung des Dispergiermittels (Wasser) wurde jeder Strang abgeblasen und in einem 3-Zonen Trockenofen bei 450/250/250 °C im Luft-Gegenstrom getrocknet und das Pulver aufgeschmolzen.

Durch Veraschen wurde der Polymergehalt auf dem vorbehandelten Faserstrang zu 3,6 Gew.-% vom Fasergewicht (abzüglich 0,5 Gew.-% verdampfbare Schlichtebestandteile) bestimmt.

Zur Schmelzimprägnierung des vorimprägnierten Glasfaserstranges wurde ein handelsübliches Polypropylen-Granulat mit Stabilisatoren unter Zusatz von 1 Gew.-% des in Beispiel 1 genannten Haftvermittlers verwendet. Bei einem Fasergehalt von 50 Gew.-% ergab sich ein Gesamtgehalt an Haftvermittler von 4,1 % bezogen auf die Matrixmenge.

Aus dem Verbundwerkstoff wurden Tapes (25 mm breit, 0,25 mm dick) hergestellt, die anschließend zu Prüfkörpern (8 bzw. 12 Lagen, ca. 2 bzw. 3 mm dick) laminiert wurden.
Die mechanischen Prüfdaten sind in Tabelle 1 dargestellt.

**Tabelle 1**

| Prüfung | Anlehnung an | Beispiel 1 | Beispiel 2 |
|---|---|---|---|
| Glasfaser (Gew.-%) | | 52,4 | 51,9 |
| Zugfestigkeit/MPa | DIN 29971 | 508 +/- 26 | 523 +/- 24 |
| Biegefestigkeit längs/MPa | DIN EN 63 (L = 16d) | 506 +/- 26 | 557 +/- 26 |
| Biegefestigkeit quer/ MPa | DIN EN 63 (L = 7d) | 29,6 +/- 1,3 | 42,1 +/- 1 |
| Schlagzähigkeit/ kJ m-2 | DIN 53453 | 152 +/- 10 | 189 +/- 11 |

### Beispiel 3

Analog zu Beispiel 2 wurde ein Verbundwerkstoff hergestellt, bei dem jedoch die Schmelzimprägnierung ohne Haftvermittlerzusatz erfolgte. Der Feststoffgehalt in der wäßrigen Pulverdispersion wurde so eingestellt, daß für einen Glasfasergehalt von 50 Gew.-% ein Kupplungsmittelgehalt von 1 % bezogen auf die Matrix erreicht wurde.

Dazu wurden 3 Glasfaser-Rovings der gleichen Fasertype mit einer Geschwindigkeit von 3,75 m/min durch eine bewegte wässrige Pulverdispersion von Carbonsäuremodifizierten Polyolefinen gezogen.

Das Pulver hatte eine Teilchengröße unter 24 Mikrometer. Es wurden dem Bad 15 g/l Feststoff zugesetzt.
Als Dispersionshilfsmittel diente ein nichtionisches Tensid, (gem. Beispiel 2) das in einer Konzentration von 0,28 g/l zugegeben wurde.

Der Faserstrang wurde über 5 Stifte geführt. Der Gesamt-Umschlingungswinkel eines jeden Faserstranges betrug 250 Grad. Das Absetzen der Suspension wurde durch mechanisches Rühren verhindert. Mit Ultraschall wurden zusätzliche Agglomerate zerstört.

Zur Entfernung des Dispergiermittels wurde jeder Strang abgeblasen und in einem 3-Zonen Trockenofen bei 450/250/250 ° C im Luft-Gegenstrom getrocknet und das Pulver aufgeschmolzen.

Durch Veraschen wurde der Polymergehalt des vorbehandelten Faserstranges zu 1,5 +/- 0,05 Gew.-% vom Fasergewicht (abzüglich 0,5 Gew.-% verdampfbare Schlichtebestandteile) bestimmt. Dies entspricht bei einem Fasergehalt von 50 Gew.-% einem Kupplungsmittelgehalt von 1 Gew.-% bezogen auf die Matrix.

Zur Schmelzimprägnierung des vorimprägnierten Glasfaserstranges wurde ein handelsübliches Polypropylen-Granulat mit Stabilisatoren, jedoch ohne Haftvermittlerzusatz verwendet.

Aus dem Verbundwerkstoff wurden Tapes (25 mm breit, 0,25 mm dick) hergestellt, die anschließend zu Prüfkörpern laminiert (8 bzw. 12 Lagen, ca. 2 bzw. 3 mm dick) wurden. Die mechanischen Prüfdaten sind in Tabelle 2 dargestellt.

**Tabelle 2**

| Prüfung | Anlehnung an | Beispiel 1 | Beispiel 3 |
|---|---|---|---|
| Glasfaser in Gew.-% | | 52,4 | 53,4 |
| Zugfestigkeit/MPa | DIN 29971 | 508 +/- 26 | 589 +/- 20 |
| Biegefestigkeit längs/ MPa | DIN EN 63 (L = 16 d) | 506 +/- 26 | 589 +/- 23 |
| Biegefestigkeit quer/MPa | DIN EN 63 (L = 7d) | 29,6 +/- 1,3 | 45,2 +/- 1 |
| Schlagzähigkeit/kJ m-2 | DIN 53453 | 152 +/- 10 | 188 +/- 4 |

### Beispiel 4

Unter den Versuchsbedingungen der Beispiele 2 und 3 wurde ein Glasfaserstrang durch eine wäßrige Dispersion des pulverförmigen Haftvermittlers von Beispiel 1 (= "Kupplungsmittel") bei unterschiedlichen Gehalten des Bades an Haftvermittler und Tensid gezogen. Die Gehalte sind in Tabelle 3 aufgeführt. Der Tensidgehalt war proportional zur Menge an Haftvermittler. Der behandelte Glasfaserstrang wurde getrocknet und anschließend der aufgezogene Gehalt an Haftvermittler durch Veraschen bestimmt. Dieser Gehalt ist in Spalte 3 von Tabelle 3 angegeben. Er wurde umgerechnet in Gewichtsprozent bezogen auf Polymermatrix, unter der Annahme, daß der behandelte Strang zu einem Verbundwerkstoff mit 50 Gew.-% Glasfasergehalt und 50 Gew.-% Polymermatrix weiterverarbeitet wird. Bei dieser Weiterverarbeitung bleiben ca. 0,5 Gew.-% verdampfbare Schlichtebestandteile erhalten, die beim Veraschen verlorengehen. Der so errechnete Gehalt ist in Spalte 4 von Tabelle 3 angegeben.
Es ist zu erkennen, daß bei etwa 12 g/l Haftvermittler in der wäßrigen Dispersion auf die Faser etwa 1 Gew.-% Haftvermittler, bezogen auf Glasfaser oder bezogen auf die (spätere) Polymermatrix, aufziehen.

**Tabelle 3**

| Einwaage | | Veraschung | Berechnung |
|---|---|---|---|
| Haftvermittler im Bad g Feststoff/l | Tensidgehalt im Bad g/l | Gewichtsverlust des vorbehandelten Faserstranges Gew.-% | Kupplungsmittel bezogen auf Matrix Gew.-% |
| 0 | 0 | 0,5 | 0 |
| 2 | 0,04 | 0,6 | 0,1 |
| 4 | 0,08 | 0,8 | 0,3 |
| 10 | 0,19 | 1,2 | 0,8 |
| 15 | 0,28 | 1,7 | 1,2 |
| 20 | 0,38 | 2,3 | 1,8 |
| 25 | 0,47 | 2,8 | 2,3 |
| 45 | 0,85 | 3,8 | 3,3 |

## Patentansprüche

1. Glasfaserverstärkter Verbundwerkstoff, bestehend aus einem Polyolefin und mindestens 40 Gew.-% Glasfasern, der eine Biegefestigkeit-quer über 40 MPa und eine Schlagzähigkeit über 180 kJm⁻² aufweist, dadurch gekennzeichnet, daß der glasfaserverstärkte Verbundwerkstoff außerdem eine Zugfestigkeit über 520 MPa und eine Biegefestigkeit-längs über 550 MPa aufweist.

2. Verfahren zur Herstellung eines glasfaserverstärkten Verbundwerkstoffes gemäß Anspruch 1, wobei der Glasfaserstrang durch eine bewegte wäßrige Pulverdispersion eines Kupplungsmittels über Umlenkkörper gezogen wird, und danach das Dispergiermittel entfernt, das Pulver auf den Glasfaserstrang aufgeschmolzen und nachfolgend der vorbehandelte Faserstrang mit Polyolefinen in einer Schmelz-Pultrusion imprägniert wird.

3. Verfahren nach Anspruch 2, dadurch gekennzeichnet, daß als Kupplungsmittel carbonsäuremodifizierte Polyolefine verwendet werden.

4. Verfahren nach Anspruch 2, dadurch gekennzeichnet, daß das Kupplungsmittel in einer Korngröße unter 150 Mikrometer, vorzugsweise unter 30 Mikrometer eingesetzt wird.

5. Verfahren nach Anspruch 2, dadurch gekennzeichnet, daß der Feststoffgehalt in der wäßrigen Pulverdispersion vorzugsweise 10 bis 20 g/l beträgt.

## Claims

1. A glass fiber-reinforced composite material comprising a polyolefin and at least 40% by weight of glass fibers and having a transverse flexural strength of more than 40 MPa and an impact strength of more than 180 kJ m⁻², wherein the glass fiber-reinforced composite material additionally has a tensile strength of more than 520 MPa and a longitudinal flexural strength of more than 550 MPa.

2. A process for the preparation of a glass fiber-reinforced composite material as claimed in claim 1, the glass fiber strand being drawn through an agitated aqueous powder dispersion of a coupling agent over deflection bodies, and the dispersing agent then being removed, the powder being melted onto the glass fiber strand, and the pretreated fiber strand subsequently being impregnated with polyolefins in a melt pultrusion.

3. The process as claimed in claim 2, wherein carboxylic acid-modified polyolefins are used as the coupling agent.

4. The process as claimed in claim 2, wherein the coupling agent is employed in a particle size of less than 150 micrometers, preferably less than 30 micrometers.

5. The process as claimed in claim 2, wherein the solids content in the aqueous powder dispersion is preferably 10 to 20 g/l.

## Revendications

1. Matériau composite renforcé de fibres de verre, constitué d'une polyoléfine et d'au moins 40% en poids de fibres de verre, présentant une résistance à la flexion transversale de plus de 40 MPa et une résilience de plus de 180 kJm⁻², caractérisé en ce que le matériau composite renforcé de fibres de verre présente en outre une résistance à la traction de plus de 520 MPa et une résistance à la flexion longitudinale de plus de 550 MPa.

2. Procédé de préparation de matériau composite renforcé de fibres de verre selon la revendication 1, dans lequel l'écheveau de fibres de verre est tiré sur des éléments déflecteurs à travers une dispersion aqueuse remuée d'un agent de couplage en poudre, l'agent de dispersion est ensuite éliminé, la poudre est fondue sur l'écheveau de fibres et l'écheveau de fibres prétraité est ensuite imprégné de polyoléfines en une fusion-pultrusion.

3. Procédé selon la revendication 2, caractérisé en ce que l'agent de couplage est une polyoléfine modifiée acide carboxylique.

4. Procédé selon la revendication 2, caractérisé en ce que l'agent de couplage est mis en oeuvre à une granulométrie inférieure à 150 µ, de préférence inférieure à 30 µ.

5. Procédé selon la revendication 2, caractérisé en ce que la teneur en solides dans la dispersion aqueuse de poudre se situe de préférence entre 10 et 20 g/l.
